# DEMANDE DE BREVET EUROPEEN

(11) **EP 2 236 985 A1**
(43) Date de publication de la demande: **06.10.2010**
(21) Numéro de dépôt: 10158231.0
(22) Date de dépôt: 29.03.2010
(51) Int. Cl.: G01C 21/26, G08G 1/0969, H04L 29/08, H04L 29/06

(54) **Gestion de données dans un système d'informations géographiques**

(30) Priorité: 31.03.2009 FR 0952066
(71) Demandeur: France Telecom, 75015 Paris (FR)
(72) Inventeur: Bouget, Loïc, 35 000, RENNES (FR); Floutier, Christophe, 35700, RENNES (FR); Gioia, Patrick, 35530, SERVON SUR VILAINE (FR)
(74) Mandataire: Cabinet Plasseraud

(57) **Abrégé**

Dans un système d'informations géographiques, un environnement spatial est représenté selon des données de représentation en référence à des zones géographiques. Le système d'informations géographiques comprend un serveur et un terminal reliés via un réseau de communication. Le serveur stocke les données de représentation en fonction des zones géographiques. Au niveau du terminal, en fonction d'un critère relatif à un niveau de charge du terminal, on sélectionne (21) une pluralité de zones géographiques. Puis, on émet (22) depuis le terminal à destination du serveur une requête indiquant la pluralité de zones géographiques sélectionnée. Enfin, le terminal reçoit (23) des données de représentation selon un protocole de transmission en continu.

## Description

La présente invention concerne la gestion de données dans un système d'informations géographiques, et plus particulièrement la gestion de la transmission de ce type de données depuis un serveur vers un terminal client.

Un système d'informations géographiques permet de proposer une représentation plus ou moins réaliste d'un environnement spatial en se basant sur des primitives graphiques telles que des points, des vecteurs, ou encore des polygones. Ainsi, certains environnements spatiaux réels peuvent être représentés de manière virtuelle sur la base de données de représentation qui sont mémorisées dans une base de données. Dans un tel système, des données de représentation de l'espace considéré sont stockées par exemple au niveau d'un serveur, et sont transmises à un terminal client du serveur en fonction des besoins de l'application ou des applications mises en oeuvre au niveau du terminal. On peut notamment prévoir dans ce contexte d'offrir un service de navigation virtuelle dans certains milieux urbains.

Toutefois, un terminal n'a en général pas la capacité de stockage pour mémoriser la quantité de données de représentation nécessaire pour une ville dans laquelle l'utilisateur du terminal souhaite naviguer de manière virtuelle par exemple. Ainsi, le terminal reçoit en général seulement une partie des données de représentation qui correspond à une partie de l'environnement spatial, représentant la ville, à l'intérieur duquel l'utilisateur souhaite naviguer. Puis, en fonction d'un déplacement virtuel au sein de la ville, il convient de recevoir éventuellement d'autres données de représentation dont le terminal a besoin pour l'affichage. La gestion de la réception des données de représentation depuis le serveur au niveau du terminal est un élément important sur lequel reposent les performances du service offert à l'utilisateur du terminal, comme un service de navigation virtuelle par exemple.

On pourrait prévoir de recevoir de telles données depuis le serveur selon une transmission en continu classique de type 'streaming' en anglais. Toutefois, ce type de transmission en continu n'est pas adapté pour la transmission de données de représentation. En effet, une transmission de type streaming est adaptée pour transmettre des données qui sont indexées selon une dimension seulement, telles que des données relatives à des contenus multimédia classiques (comme des contenus audio ou encore audiovisuel) qui sont indexées de manière temporelle uniquement. Un terminal qui souhaite recevoir des données relatives à un contenu multimédia classique (par exemple, un fichier vidéo, un fichier audio, etc.), peut requérir la transmission de ce contenu à partir du début ou encore en indiquant une référence temporelle pour que le serveur transmette les données du contenu multimédia, à partir de la référence temporelle indiquée par le terminal, de manière linéaire et continue dans le temps.

Or, des données de représentation utilisées par un système d'informations géographiques sont généralement indexées selon deux dimensions. En effet, ces données de représentation dépendent de la localisation d'un point de vue à l'intérieur d'un monde virtuel, c'est-à-dire une représentation d'un environnement spatial, dans lequel cet utilisateur souhaite naviguer. Cette localisation peut être déterminée relativement à un référentiel à deux dimensions par rapport au sol du monde virtuel considéré. Ainsi, une transmission de type streaming ne peut pas être appliquée de manière performante, puisque les données de représentation à transmettre au terminal dépendent de sa localisation courante et de son déplacement, qui sont indexés selon deux dimensions. Ces données de représentation ne peuvent donc pas être transmises de manière linéaire à partir d'une localisation donnée.

La présente invention vise à améliorer la situation.

Un premier aspect de la présente invention propose un procédé de gestion de réception de données dans un système d'informations géographiques dans lequel un environnement spatial est représenté selon des données de représentation en référence à des zones géographiques ;
ledit système d'informations géographiques comprenant un serveur et un terminal reliés via un réseau de communication ;
le serveur stockant les données de représentation en fonction des zones géographiques ;
ledit procédé comprenant les étapes suivantes exécutées au niveau du terminal :
/a/ en fonction d'un critère relatif à un niveau de charge du terminal, sélectionner une pluralité de zones géographiques ;
/b/ émettre à destination du serveur une requête indiquant ladite pluralité de zones géographiques sélectionnée ; et
/c/ recevoir des données de représentation selon un protocole de transmission en continu.

On entend par les termes 'zone géographique', une référence géographique des données de représentation. Dans un mode de réalisation de la présente invention, une image en deux dimensions représente une projection au sol de l'environnement spatial considéré. Cette image est découpée en une pluralité de zones géographiques (ou 'patch' en anglais) qui sont utilisées en tant que référence géographique de la représentation spatiale. En d'autres termes, les zones géographiques correspondent à des références au sol de l'environnement spatial dans lequel la navigation est possible.

On entend par les termes 'niveau de charge du terminal', une information indiquant la charge courante du terminal relativement à ses capacités quelles qu'elles soient, logicielles et/ou matérielles, comme par exemple sa charge relativement à ses capacités de stockage ou encore relativement à ses capacités de traitement de données.

Aucune limitation n'est attachée aux applications mises en oeuvre sur le terminal qui peuvent utiliser les données de représentation reçues par le terminal. Ces applications peuvent être relatives à tout type de navigation virtuelle dans un environnement en trois dimensions. On peut notamment prévoir que l'application qui utilise ces données de représentation soit une application de navigation virtuelle dans l'environnement spatial considéré. Une telle application permet d'afficher à l'écran des images en trois dimensions d'un environnement spatial dans lequel l'utilisateur du terminal souhaite se déplacer. On peut ainsi prévoir un service de navigation virtuelle proposant différents milieux urbains à l'utilisateur pour lui permettre de naviguer virtuellement à l'intérieur de ces environnements. Ce service peut fournir, outre une navigation virtuelle, des informations supplémentaires correspondantes comme par exemple indiquer relativement à certains bâtiments de la ville, des références de professionnels qui peuvent y être consultés. Aucune limitation n'est attachée au type d'informations supplémentaires qui peuvent être associées à un tel service de navigation virtuelle notamment dans un milieu urbain.

L'application qui utilise les données de représentation reçues au niveau du terminal peut également être une application de jeu vidéo par exemple. En effet, certains jeux vidéo mettent en scène un ou plusieurs personnages virtuels qui évoluent dans des environnements spatiaux en trois dimensions représentés sur l'écran du terminal.

Quelque soit l'application visée, l'écran du terminal affiche une représentation d'une partie de l'environnement spatial à partir d'un certain point de vue. Il est possible de déplacer ce point de vue au sein de l'environnement spatial qui est représenté à l'écran du terminal.

Grâce aux dispositions énoncées ci-avant, il est possible d'obtenir une transmission en continu (streaming) des données de représentation qui, d'une part, sont pertinentes pour l'application mise en oeuvre sur le terminal et, d'autre part, ne surchargent pas le terminal au-delà de ses capacités. Cette combinaison d'une transmission en continu depuis le serveur, sur la base d'une requête pertinente émise par le terminal, permet ainsi d'augmenter les performances de la navigation virtuelle, notamment sur le plan de la fluidité d'affichage et de navigation.

En effet, il est ici prévu de requérir, en une seule requête, une transmission en continu des données de représentation utiles uniquement nécessaires à l'application mise en oeuvre sur le terminal, et en quantité adaptée à la fois à la charge du terminal et à ses capacités. Le terminal met en oeuvre une étape de sélection des paramètres à envoyer au serveur pour déclencher une telle transmission de données en continu.

Il convient de gérer, au fil de la réception des données de représentation, un compromis entre les capacités de stockage du terminal et les quantités de données de représentation nécessaires pour un rendu performant de l'environnement spatial dans lequel l'utilisateur du terminal souhaite naviguer virtuellement.

On prévoit de sélectionner une pluralité de zones géographiques sur la base d'un critère relatif à un niveau de charge du terminal. Cette étape permet avantageusement de requérir des données de représentation qui sont à la fois pertinentes pour pouvoir offrir à l'utilisateur du terminal une représentation virtuelle de l'environnement spatial et adaptées aux capacités du terminal.

Une telle gestion de la transmission des données de représentation permet un gain de temps sensible, notamment à l'initialisation de l'application du terminal, c'est-à-dire lorsque le terminal n'a pas encore mémorisé de donnée de représentation relative à l'environnement spatial dans lequel il souhaite naviguer de manière virtuelle. L'initialisation d'une transmission en continu de données de représentation peut ainsi être réalisée de manière optimale. En effet, à l'initialisation d'une application de type navigation virtuelle, le niveau de charge du terminal peut être relativement bas, notamment par rapport à la capacité de stockage et par rapport à la capacité de traitement de données. Par conséquent, un nombre important de zones géographiques peut avantageusement être sélectionné à l'étape /a/. Puis, les données de représentation correspondant à ces zones géographiques sont transmises en continu au terminal. On peut ainsi accélérer la fourniture du service au démarrage d'un facteur 10 par rapport, notamment, à un schéma de transmission basé sur une requête émise pour chaque zone géographique pertinente pour l'utilisateur du terminal.

Aucune limitation n'est attachée au terme terminal dans le contexte de la présente invention. Un terminal peut notamment correspondre à un ordinateur ou encore un téléphone mobile, et de manière plus générale à tout dispositif électronique capable de mettre en oeuvre une application de système d'informations géographiques.

On entend par les termes 'transmission en continu', une transmission selon laquelle les données de représentation correspondantes aux indications précisées dans le message de requête du terminal sont transmises à ce dernier de manière continue, c'est à dire selon un flux de données continu.

On peut à cet effet se baser sur un protocole de transmission de type http/TCP (pour 'HyperText Transfer Protocol' et 'Transmission Control Protocol' en anglais). L'utilisation d'un tel protocole permet avantageusement de passer au travers d'éléments de sécurité, tels que des Firewall (ou "pare-feux"). On peut également se baser sur un protocole garantissant la sécurité comme un protocole de type SSL (pour 'Secure Sockets Layers' en anglais).

En outre, l'utilisation de tels protocoles permet d'effectuer une transmission avec un taux de perte de données quasiment nul.

Ce procédé permet une transmission adaptée à la fois à un indexage selon deux dimensions, et à un comportement de l'utilisateur qui peut être aléatoire, et de ce fait non linéaire, contrairement aux transmissions de contenus audiovisuels en mode streaming, par exemple.

Lorsque les données de représentation sont de différents types, à l'étape /a/, on peut prévoir de sélectionner en outre au moins un type de données par zone géographique sélectionnée.

Ainsi, on peut requérir soit la transmission en continu de données de représentation relatives à une ou plusieurs zones géographiques, soit indiquer, par zone géographique, un ou plusieurs types de données. Les types de données, par zone géographique, peuvent être indiqués par des index respectifs.

On entend par les termes 'types de données de représentation', les différents types de données qui peuvent être utilisés pour représenter l'environnement spatial considéré, comme par exemple, les bâtiments, le mobilier urbain, la végétation, les objets publicitaires, le relief, la texture du relief, la signalisation, les commerces...

Ici, on peut établir un compromis entre le nombre de zones géographiques sélectionnées et le nombre de types de données sélectionnés, relativement au niveau de charge courante du terminal. Ce compromis peut dépendre notamment du type d'application qui utilise ces données de représentation. Par exemple, s'il s'agit d'une application visant à indiquer des professionnels présents aux alentours du point de vue à partir duquel est observé l'environnement spatial virtuel sur l'écran du terminal, le type de données relatif aux bâtiments sera sélectionné alors que l'affichage d'autres types de données pourrait être rendu optionnel. En triant ainsi le type de données à transmettre en priorité, on peut réduire la quantité de données de représentation par zone géographique. Il est alors possible de recevoir des données de représentation pour un plus grand nombre de zones géographiques tout en restant dans les limites des capacités du terminal en termes de charge.

Dans un mode de réalisation de la présente invention, l'étape /a/ est en outre fonction d'un niveau de charge courante du réseau de communication. Ainsi, les zones géographiques, et dans certains cas les types de données sélectionnés, sont avantageusement fonction de l'état du réseau de communication utilisé entre le serveur et le terminal. On peut donc adapter les données de représentation transmises au terminal à la fois par rapport à des critères de charge propres au terminal et également par rapport à des critères de charge du réseau. On peut ainsi garantir une transmission de qualité entre le serveur et le terminal, puisqu'elle est adaptée au réseau de communication.

Dans un mode de réalisation de la présente invention, la requête émise depuis le terminal vers le serveur indique une localisation courante et une orientation dans l'environnement spatial ; et les données de représentation reçues correspondent aux données de représentation adaptées à la localisation courante et à l'orientation dans l'environnement spatial.

De façon à réduire la quantité de données de représentation à transmettre et à stocker au niveau du terminal, il est possible de mettre en oeuvre un algorithme de visibilité, c'est-à-dire un algorithme qui permet de sélectionner des données de représentation adaptées à la localisation et à l'orientation courante. En effet, il est possible de représenter un environnement spatial de manière adaptée à la localisation relative à un point de vue dans le monde virtuel et à une orientation par rapport aux objets voisins. Le point de vue correspondant au monde virtuel affiché sur l'écran est situé plus ou moins loin des objets qui l'entourent. Par exemple, lorsque le monde virtuel de la navigation est un milieu urbain, le point de vue peut être situé plus ou moins loin des immeubles voisins, ces immeubles pouvant en outre être plus ou moins hauts. Ainsi, suivant la localisation et l'orientation du point de vue dans l'environnement virtuel à partir duquel on visionne le monde virtuel à l'écran, il est possible de voir plus ou moins en détail les objets du voisinage.

Il est alors avantageux de prévoir plusieurs représentations possibles de ces objets à différentes échelles, c'est-à-dire avec différents niveaux de détail. Le document EP 1 455 308 décrit une représentation multi échelle de ce type, qui permet de transmettre des données de représentation adaptée à la localisation et l'orientation relative au point de vue. La mise en oeuvre d'un tel enseignement permet de réduire de manière pertinente la quantité de données de représentation transmise depuis le serveur vers le terminal, pour un nombre donné de zones géographiques indiquées dans la requête du terminal. Cette caractéristique permet donc d'optimiser la bande passante utilisée dans le réseau, ainsi que la place mémoire occupée au niveau du terminal et donc son niveau de charge au regard de la capacité mémoire du terminal.

Dans le but de ne transmettre au terminal que les données de représentation adaptées à la fois à sa localisation au sein du monde virtuel et au niveau de visibilité qu'il a du monde virtuel depuis cette localisation, on peut prévoir de mettre en oeuvre tout algorithme de visibilité qui permet de déterminer de telles données de représentation, comme celui décrit en outre par exemple dans le document EP 1 934946.

Le protocole de transmission en continu peut avantageusement être basé sur un protocole de type http/TCP.

Un deuxième aspect de la présente invention propose un procédé de gestion de transmission de données dans un système d'informations géographiques dans lequel un environnement spatial est représenté selon des données de représentation en référence à des zones géographiques ;
ledit système d'informations géographiques comprenant un serveur et un terminal reliés via un réseau de communication ;
le serveur stockant les données de représentation en fonction des zones géographiques ;
ledit procédé comprenant les étapes suivantes exécutées au niveau du serveur :
/a/ recevoir une requête indiquant une pluralité de zones géographiques ;
/b/ déterminer des données de représentation en fonction de ladite pluralité de zones géographiques ; et
/c/ transmettre au terminal lesdites données de représentation selon un protocole de transmission en continu.

Dans un mode de réalisation de la présente invention, le protocole de transmission en continu est basé sur un protocole de type http/TCP.

La requête depuis le terminal vers le serveur peut indiquer une localisation courante et une orientation ; et les données de représentation transmises peuvent alors être sélectionnées en fonction de la localisation courante et de l'orientation. Dans un mode de réalisation de la présente invention, différents objets de l'environnement spatial sont représentés selon une représentation multi échelle comme décrit dans le document EP 1 455 308. Le serveur peut alors mettre en oeuvre une méthode telle que décrite dans ce document EP 1 455 308 pour ne transmettre que des données de représentation décrivant chaque objet de l'environnement spatial avec le niveau détail qui correspond à la localisation et l'orientation relative au point de vue.

Un troisième aspect de la présente invention propose un terminal comprenant des moyens adaptés pour mettre en oeuvre un procédé de gestion selon le premier aspect de la présente invention.

Un quatrième aspect de la présente invention propose un serveur comprenant des moyens adaptés pour mettre en oeuvre un procédé selon le deuxième aspect de la présente invention.

Un cinquième aspect de la présente invention propose un système d'informations géographiques dans lequel un environnement spatial est représenté selon des données de représentation en référence à des zones géographiques ; le système comprenant un terminal selon le troisième aspect de la présente invention et un serveur selon le quatrième aspect de la présente invention.

Un sixième aspect de la présente invention propose un programme d'ordinateur comportant des instructions pour la mise en oeuvre d'un procédé selon le premier aspect de la présente invention lorsque ce programme est exécuté par un processeur.

Un septième aspect de la présente invention propose un programme d'ordinateur comportant des instructions pour la mise en oeuvre d'un procédé selon le deuxième aspect de la présente invention lorsque ce programme est exécuté par un processeur.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre des zones géographiques selon un mode de réalisation de la présente invention ;
- la figure 2 illustre les principales étapes d'un procédé selon un mode de réalisation de la présente invention ;
- la figure 3 illustre une initialisation d'une application à mettre en oeuvre sur un terminal selon un mode de réalisation de la présente invention ;
- la figure 4 illustre un terminal selon un mode de réalisation de la présente invention ; et
- la figure 5 illustre un serveur selon un mode de réalisation de la présente invention.

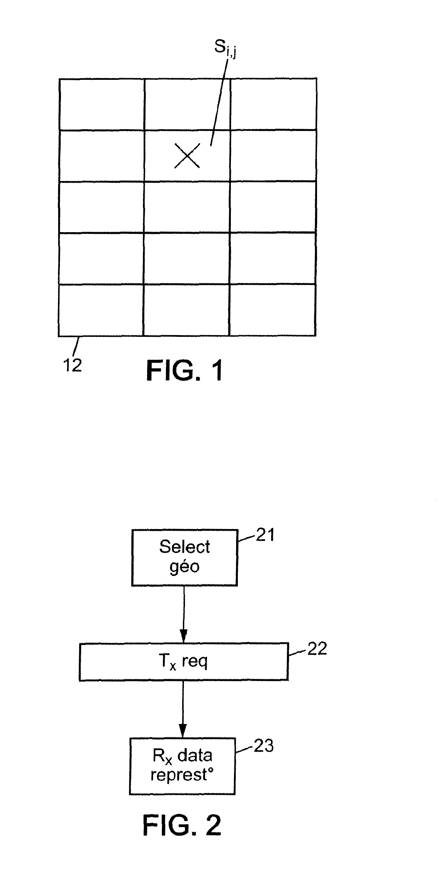

La figure 1 illustre des zones géographiques selon un mode de réalisation de la présente invention. L'environnement spatial considéré est projeté au sol dans une image à deux dimensions 12. Cette image 12 est ensuite décomposée en une pluralité de zones géographiques Sᵢ,ⱼ. Lorsque la localisation courante virtuelle de l'utilisateur du terminal est située dans une zone S_{i,j}, l'écran du terminal affiche une représentation virtuelle de ce que pourrait voir l'utilisateur s'il était réellement située au niveau de cette localisation courante.

La figure 2 illustre les principales étapes d'un procédé selon un mode de réalisation de la présente invention.

Dans un système d'informations géographiques selon un mode de réalisation, un environnement spatial est représenté selon des données de représentation en référence à des zones géographiques. Un serveur et un terminal sont reliés via un réseau de communication et le serveur stocke les données de représentation en fonction des zones géographiques.

A une étape 21, le terminal sélectionne une pluralité de zones géographiques en fonction d'un critère relatif à un niveau de charge du terminal.

A une étape 22, le terminal émet à destination du serveur une requête indiquant cette pluralité de zones géographiques sélectionnée. Puis, à une étape 23, le terminal reçoit des données de représentation selon un protocole de transmission en continu.

Grâce à cette étape de sélection 21 prenant en compte la charge courante du terminal, il est possible d'optimiser la transmission en continu de données de représentation depuis le serveur vers le terminal.

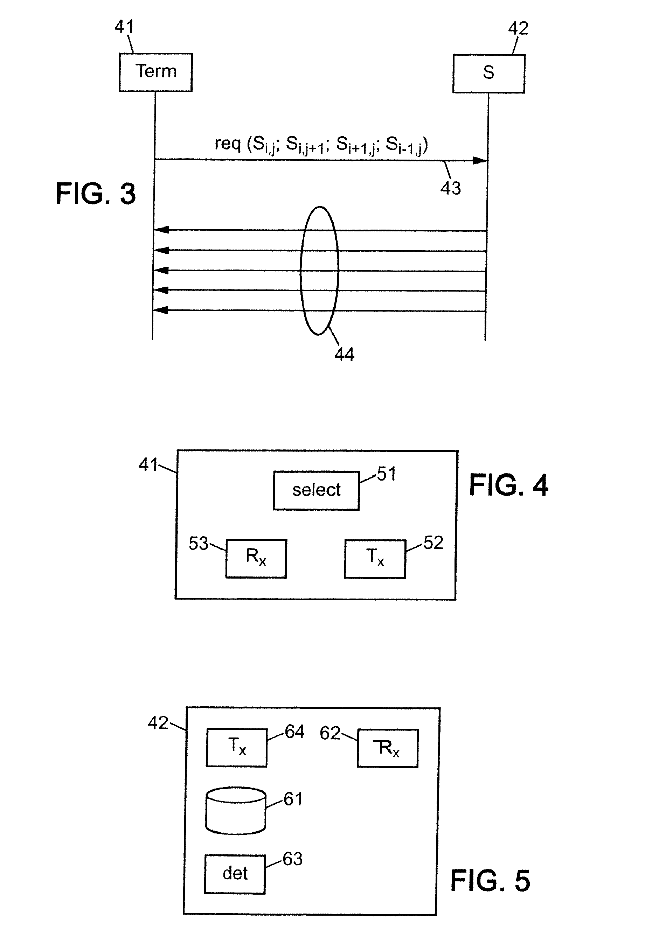

La figure 3 illustre une initialisation d'une application à mettre en oeuvre sur un terminal selon un mode de réalisation de la présente invention. A l'initialisation de l'application, l'utilisateur du terminal souhaite virtuellement être situé dans la zone géographique Sᵢ,ⱼ. Puis, il contrôle le niveau de charge. A l'initialisation, le niveau de charge étant faible à la fois relativement à la capacité mémoire mais aussi relativement à la capacité de traitement de données, le terminal peut sélectionner des données de représentation relatives à la zone géographique S_{i,j}, ainsi qu'aux trois zones géographiques qui lui sont voisines S_{¡,j+1}, S_{i+i,j} et S_{i-1,i}.

Il émet une requête 43 indiquant avantageusement de manière groupée les quatre zones géographiques pour lesquelles il souhaite de disposer des données de représentation pour une navigation à venir, et pour lesquelles il a la capacité mémoire suffisante.

En réponse à cette requête, le serveur transmet de manière continue les données de représentation 44 qui correspondent aux quatre zones géographiques indiquées dans la requête.

Grâce à ces dispositions, le terminal dispose de données de représentation non seulement utiles à sa navigation à venir mais en outre adaptées à ses capacités.

La figure 4 illustre un terminal selon un mode de réalisation de la présente invention. Ce terminal 41 comprend :
- une unité de sélection 51 adaptée pour sélectionner, en fonction d'un critère relatif à un niveau de charge du terminal, une pluralité de zones géographiques ;
- une unité d'émission 52 adaptée pour émettre à destination du serveur une requête indiquant la pluralité de zones géographiques sélectionnée ; et
- une unité de réception 53 adaptée pour recevoir des données de représentation selon un protocole de transmission en continu.

Ce terminal peut comprendre une unité de détermination du niveau de charge du terminal. Le niveau de charge peut être relatif à différents aspects de capacité du terminal. Ainsi, par exemple, ce niveau de charge peut être relatif à la capacité mémoire du terminal ou encore à la capacité de traitement des données de représentation du terminal. Ce niveau de charge peut être exprimé en pourcentage de la capacité maximale du terminal.

Il est possible de se baser sur la capacité du terminal au regard du nombre d'image par secondes qu'est capable de traiter le terminal, ou encore 'frame rate' en anglais. On peut ainsi prévoir de déterminer un niveau de charge par rapport à une valeur de 'frame rate' à un moment donné, cette valeur variant en fonction du temps.

On peut également se référer à un niveau d'occupation de mémoire vive pour déterminer un niveau de charge. En effet, un niveau de charge supérieur à un certain seuil peut avantageusement indiquer que le terminal ne pourra pas gérer plus de données de représentation sans devoir stocker des données de représentation dans une mémoire disque et ainsi engendrer une baisse de 'frame rate' conséquente.

La figure 5 illustre un serveur selon un mode de réalisation de la présente invention. Ce serveur 42 comprend :
- une base de données 61 stockant les données de représentation en fonction des zones géographiques ;
- une unité de réception 62 adaptée pour recevoir une requête indiquant une pluralité de zones géographiques ;
- une unité de détermination 63 adaptée pour déterminer des données de représentation en fonction de la pluralité de zones géographiques ; et
- une unité de transmission 64 adaptée pour transmettre au terminal les données de représentation selon un protocole de transmission en continu.

L'unité de réception 62 de ce serveur 42 est en outre adaptée pour recevoir une requête indiquant une localisation courante au sein du monde virtuel et une orientation dans ce monde virtuel. Dans ce contexte, le serveur peut en outre comprendre une unité de sélection de données de représentation à transmettre au terminal en fonction de la localisation et de l'orientation indiquées en appliquant un algorithme de visibilité.

## Revendications

1. Procédé de gestion de réception de données dans un système d'informations géographiques dans lequel un environnement spatial est représenté selon des données de représentation en référence à des zones géographiques ;
ledit système d'informations géographiques comprenant un serveur (42) et un terminal (41) reliés via un réseau de communication ;
le serveur stockant les données de représentation en fonction des zones géographiques ;
ledit procédé comprenant les étapes suivantes exécutées au niveau du terminal :
/a/ en fonction d'un critère relatif à un niveau de charge courante du terminal, sélectionner (21) une pluralité de zones géographiques ;
/b/ émettre (22) à destination du serveur une requête indiquant ladite pluralité de zones géographiques sélectionnée ; et
/c/ recevoir (23) des données de représentation selon un protocole de transmission en continu.

2. Procédé de gestion selon la revendication 1, dans lequel les données de représentation sont de différents types ; et dans lequel, à l'étape /a/, on sélectionne en outre au moins un type de données par zone géographique sélectionnée.

3. Procédé de gestion selon la revendication 1, dans lequel l'étape /a/ est en outre fonction d'un niveau de charge courante du réseau de communication.

4. Procédé de gestion selon la revendication 1, dans lequel la requête depuis le terminal vers le serveur indique une localisation courante et une orientation dans l'environnement spatial ; et
dans lequel les données de représentation reçues correspondent aux données de représentation adaptées à la localisation courante et à l'orientation dans l'environnement spatial.

5. Procédé de gestion transmission de données dans un système d'informations géographiques dans lequel un environnement spatial est représenté selon des données de représentation en référence à des zones géographiques ;
ledit système d'informations géographiques comprenant un serveur et un terminal reliés via un réseau de communication ;
le serveur stockant les données de représentation en fonction des zones géographiques ;
ledit procédé comprenant les étapes suivantes exécutées au niveau du serveur :
/a/ recevoir une requête indiquant une pluralité de zones géographiques ;
/b/ déterminer des données de représentation en fonction de ladite pluralité de zones géographiques ; et
/c/ transmettre au terminal lesdites données de représentation selon un protocole de transmission en continu.

6. Procédé de gestion de données selon la revendication 5, dans lequel la requête depuis le terminal vers le serveur indique une localisation
courante et une orientation dans l'environnement spatial ; et
dans lequel les données de représentation transmises sont sélectionnées en fonction de la localisation courante et de l'orientation dans l'environnement spatial.

7. Terminal (41) dans un système d'informations géographiques dans lequel un environnement spatial est représenté selon des données de représentation en référence à des zones géographiques ;
ledit système d'informations géographiques comprenant en outre un serveur relié au terminal via un réseau de communication ;
le serveur stockant les données de représentation en fonction des zones géographiques ;
ledit terminal comprenant :
- une unité de sélection (51) adaptée pour sélectionner, en fonction d'un critère relatif à un niveau de charge courante du terminal, une pluralité de zones géographiques ;
- une unité d'émission (52) adaptée pour émettre à destination du serveur une requête indiquant ladite pluralité de zones géographiques sélectionnée ; et
- une unité de réception (53) adaptée pour recevoir des données de représentation selon un protocole de transmission en continu.

8. Serveur (42) dans un système d'informations géographiques dans lequel un environnement spatial est représenté selon des données de représentation en référence à des zones géographiques ;
ledit système d'informations géographiques comprenant en outre un terminal relié au serveur via un réseau de communication ;
le serveur comprenant :
- une base de données (61) stockant les données de représentation en fonction des zones géographiques ;
- une unité de réception (62) adaptée pour recevoir une requête indiquant une pluralité de zones géographiques ;
- une unité de détermination (63) adaptée pour déterminer des données de représentation en fonction de ladite pluralité de zones géographiques ; et
- une unité de transmission (64) adaptée pour transmettre au terminal lesdites données de représentation selon un protocole de transmission en continu.

9. Système d'informations géographiques dans lequel un environnement spatial est représenté selon des données de représentation en référence à des zones géographiques ; ledit système comprenant un terminal (41) selon la revendication 7 et un serveur (42) selon la revendication 8.

10. Programme d'ordinateur comportant des instructions pour la mise en oeuvre d'un procédé de gestion de réception de données selon la revendication 1 lorsque ce programme est exécuté par un processeur.

11. Programme d'ordinateur comportant des instructions pour la mise en oeuvre d'un procédé de gestion de transmission de données selon la revendication 5 lorsque ce programme est exécuté par un processeur.
